# EUROPEAN PATENT APPLICATION

(11) **EP 4 357 381 A1**
(43) Date of publication of application: **24.04.2024**
(21) Application number: 22824755.7
(22) Date of filing: 24.05.2022
(51) Int. Cl.: C08F 290/06, C08F 290/14, C08K 5/13, C08K 5/17, C08F 2/44

(54) **RADICALLY POLYMERIZABLE RESIN COMPOSITION**

(30) Priority: 18.06.2021 JP 2021101866
(71) Applicant: Resonac Corporation, Tokyo 105-7325 (JP)
(72) Inventor: USAMI, Akira, Tokyo 105-7325 (JP); FUJITA, Shinichiro, Tokyo 105-7325 (JP)
(74) Representative: Strehl Schübel-Hopf & Partner
(86) International application number: PCT/JP2022/021260
(87) International publication number: WO 2022/264761

(57) **Abstract**

The present invention provides a radically polymerizable resin composition which is capable of suppressing change in strength of a cured product thereof due to exposure to a high-temperature environment. The radically polymerizable resin composition according to the present invention contains a radically polymerizable resin (A), an ethylenically unsaturated compound (B), a hindered phenolic compound (C), and a hindered amine compound (D).

## Description

### [Technical Field]

The present invention relates to radically polymerizable resin compositions.

The present application claims priority based on Japanese Patent Application No. 2021-101866 filed on June 18, 2021, the contents of which are hereby incorporated herein.

### [Background Technology]

In the past, external stimuli such as oxygen and ozone in the air have caused changes in strength properties and discoloration of plastics, and there are antioxidants that protect plastics from air oxidation. Antioxidants are broadly divided into radical chain reaction inhibitors, which prevent radicals generated by the air oxidation process from advancing to the next chain process, and peroxide decomposers, which decompose peroxides generated by the air oxidation process into stable compounds. Examples of radical chain reaction inhibitors include phenolic compounds and aromatic amine compounds. Examples of peroxide decomposers include sulfur-containing compounds and phosphites. To protect plastics from oxidative degradation effectively, radical chain reaction inhibitors or peroxide decomposers may be used alone. However, since each step of action is different, a significant synergistic effect is produced when both are used together, and as a result, usually both are used together to prevent the oxidative degradation of plastics. As a radical chain reaction inhibitor, Non-Patent Document 1 states: "amine compounds are rarely used for plastics because of their polluting nature and mostly phenolic compounds are used". Non-Patent Document 1 discloses an example in which the use of various phenolic antioxidants in combination with a sulfur-containing compound or a phosphite system solved the problems of change in strength properties of plastic and poor appearance such as coloration of plastics.

Among these stabilizers, phosphorus-based antioxidants or thioether-based antioxidants are particularly effective in color stabilization. These antioxidants can also have a synergistic effect with hindered phenolic antioxidants and are widely used in plastic materials. However, they have not yet stabilized the strength properties of plastics when exposed to high temperatures.

Numerous studies on thermal stabilization of plastics have been reported, and it has been proposed to use organosiloxane and hindered amine with a piperidine structure for thermal stabilization of epoxy resins (Patent Document 1). In addition, for the purpose of thermal stabilization of polypropylene-based carbon fiber reinforced plastics, it has been proposed to use polypropylene resin with controlled crystallinity, and to use phenolic antioxidants and phosphoric antioxidants (Patent Document 2). In addition, it has been proposed to use hindered phenolic antioxidants and thioether antioxidants to stabilize UV curable adhesives (Patent Document 3).

In addition, the use of hindered phenol-based antioxidants in aromatic polycarbonates has been proposed to achieve both heat resistance and mechanical strength of polycarbonate resins (Patent Document 4). Furthermore, it has been proposed to use polyols with specific hydroxyl values, inorganic fillers, and plasticizers to improve the heat resistance of polyurethane resins (Patent Document 5).

### [Prior Art Documents]

### [Patent Documents]

Patent Document 1: Japanese Patent Laid-Open No. 2014-237861
Patent Document 2: Japanese Patent Laid-Open No. 2017-43672
Patent Document 3: Japanese Patent Laid-Open No. 2018-100403
Patent Document 4: Japanese Patent Laid-Open No. 2020-139141
Patent Document 5: Japanese Patent Laid-Open No. 2019-183125

### [Non-Patent Documents]

Non-Patent Reference 1: Mitsuo Akiba, Degradation and Stabilization of Polyurethane, Journal of the Adhesive Society of Japan, 2004, Vol. 40, No. 6, p. 241-252.

### SUMMARY

### (Problems to Be Solved by Invention)

Regarding thermal stabilization of plastics, it is important to maintain their strength properties even when plastics are exposed to high temperatures for a long time; that is, their strength stability is important. However, Patent Documents 1, 2, 3, and 4 do not provide sufficient solutions for the strength stability of plastics.

An object of the present invention is to provide a radically polymerizable resin composition with excellent heat resistance and little change in strength properties even when exposed to a high-temperature environment for a long time.

### [Means to Solve Problems]

The content of the present disclosure includes the following embodiments [1] -

.
[1] A radically polymerizable resin composition comprising:
   a radically polymerizable resin (A);
   an ethylenically unsaturated compound (B);
   a hindered phenolic compound (C); and
   a hindered amine compound (D).
[2] The radically polymerizable resin composition according to [1], wherein the radically polymerizable resin (A) comprises at least one selected from the group consisting of urethane (meth)acrylate (A1), unsaturated polyester (A2), and epoxy (meth)acrylate (A3).
[3] The radically polymerizable resin composition according to [1] or [2], wherein with respect to a total of 100 parts by mass of the radically polymerizable resin (A) and the ethylenically unsaturated compound (B), the radically polymerizable resin composition comprises
   0.05 to 5.0 parts by mass of the hindered phenolic compound (C), and
   0.05 to 5.0 parts by mass of the hindered amine compound (D).
[4] The radically polymerizable resin composition according to any one of [1] to [3], wherein the radically polymerizable resin (A) or the ethylenically unsaturated compound (B) comprises at least one selected from the group consisting of a polyalkyl ether-derived skeleton, a butadiene-derived skeleton, and an isoprene-derived skeleton.
[5] The radically polymerizable resin composition according to any one of [1] to [4], wherein the hindered phenolic compound (C) is at least one selected from the group consisting of a tetrakis hindered phenolic compound, a tris hindered phenolic compound, a bis hindered phenolic compound, and a mono hindered phenolic compound.
[6] The radically polymerizable resin composition according to any one of [1] to [5], wherein the hindered amine compound (D) is at least one selected from the group consisting of a tetrakis hindered amine compound, a tris hindered amine compound, a bis hindered amine compound, a mono hindered amine compound, and a (meth)acrylate hindered amine compound.
[7] The radically polymerizable resin composition according to any one of [1] to [6], wherein the hindered phenolic compound (C) has a molecular weight of 300 to 3,000.
[8] The radically polymerizable resin composition according to any one of [1] to [7], wherein the hindered amine compound (D) has a molecular weight of 100 to 3,000.
[9] The radically polymerizable resin composition according to any one of [1] to [8], further comprising a curing agent (E).
[10] The radically polymerizable resin composition according to [9], wherein the curing agent (E) is a photo-radical polymerization initiator.
[11] The radically polymerizable resin composition according to any one of [1] to [10], wherein the radically polymerizable resin composition is for sealing electrical and electronic components.
[12] A sealant using the radically polymerizable resin composition according to any one of [1] to [11].
[13] An electrical and electronic component, which is resin-sealed using the sealant according to [12].

### [Effect of Invention]

According to the present invention, it is possible to provide a radically polymerizable resin composition that can suppress the strength change of a cured product due to exposure to a high-temperature environment.

### DETAILED DESCRIPTION OF THE EMBODIMENTS

The present invention will be described in further detail below. The present invention is not limited only to the following examples.

"n to m" means not less than the value of n and not more than the value m.

"(Meth)acrylic" is a generic term for acrylic and methacrylic, and "(meth)acrylate" is a generic term for acrylate and methacrylate.

"Ethylenically unsaturated bonds" refer to double bonds formed between carbon atoms except for those forming aromatic rings, and "ethylenically unsaturated compounds" refer to compounds with ethylenically unsaturated bonds.

"Radically Polymerizable Resin Composition"

The radically polymerizable resin composition according to one embodiment of the present invention contains a radically polymerizable resin (A), an ethylenically unsaturated compound (B), a hindered phenolic compound (C), and a hindered amine compound (D).

### (Radically Polymerizable Resin (A))

Radically polymerizable resins according to the present embodiment are not particularly limited as long as they are resins (polymers, etc.) in which a polymerization reaction proceeds via a radical polymerization initiator. In the present disclosure, the radically polymerizable resins (A) and ethylenically unsaturated compounds (B) described later are collectively referred to as radically polymerizable components. One kind of radically polymerizable resin (A) may be used alone or in combination with two or more other kinds of the resin. The radically polymerizable resin (A) preferably has at least one kind selected from the group consisting of a polyalkyl ether-derived skeleton, a butadiene-derived skeleton, and an isoprene-derived skeleton.

Among them, polyalkyl ether-derived, butadiene-derived, and isoprene-derived skeletons are preferred in order to reduce the elastic modulus of cured resins and the temperature dependence of the elastic modulus, especially polyalkyl ether-derived and butadiene-derived skeletons.

Examples of the radically polymerizable resin (A) include urethane (meth)acrylate (A1), unsaturated polyester (A2), and epoxy (meth)acrylate (A3).

### <Urethane (Meth)acrylate (A1)>

Urethane (meth)acrylate (A1) is a compound with a polyurethane structure and more than one (meth)acryloyloxy. A preferred urethane (meth)acrylate (A1) is represented by general formula (1). Urethane (meth)acrylates may be used alone or in combination.

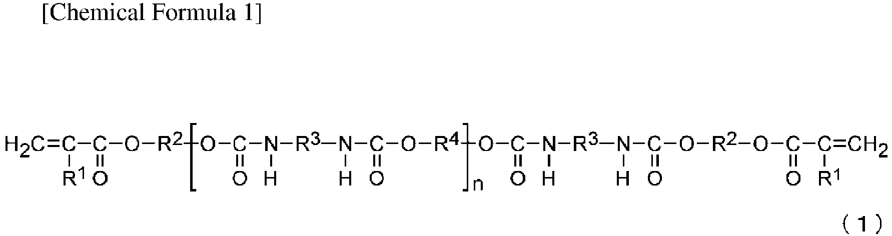

In general formula (1), R¹ is H or CH₃. R² is a bivalent hydrocarbon group that may contain an ether bond, where the hydrogen atom may be replaced by a substituent. R³ is a bivalent hydrocarbon group. R⁴ is a structural unit derived from polyester polyol, polyether polyol, or polyalkylene glycol with a number-average molecular weight of 300 to 8,000. n is a real number equal to or greater than 1.00, wherein n is the number of repeating units and the average value based on the number of all urethane (meth)acrylates contained in the radically polymerizable resin composition.

In general formula (1), R¹ is H or CH₃, preferably CH₃.

In the above general formula (1), R² is a bivalent hydrocarbon group that may contain an ether bond, and the hydrogen atom may be substituted by a substituent. The ether bond may be on the main or side chain. Examples of the bivalent hydrocarbon groups constituting R² include alkylene groups, cycloalkylene groups, and arylene groups, and these hydrocarbon groups may have branches or contain ether bonds. R² is preferably an alkylene group with 2 to 6 carbon atoms. In addition, R² may be an alkylene group with 2 to 6 carbon atoms in which the hydrogen atom may be replaced by a substituent such as a phenyl group, a phenoxy group, or a (meth)acryloyloxy group. R² is particularly preferably an ethylene group.

The structure at both ends including R¹ and R² in the above general formula (1) is derived from a hydroxyl group-containing (meth)acrylate represented by the following general formula (2).

CH₂=C(R¹)C(O)OR²OH (2)

In general formula (2) above, the hydroxyl group may be attached to the end of R² or may be a side chain of R². Examples of hydroxyl group-containing (meth)acrylates represented by general formula (2) include mono (meth)acrylates such as 2-hydroxyethyl (meth)acrylate, 2-hydroxypropyl (meth)acrylate, 2-hydroxybutyl (meth)acrylate, phenoxyhydroxypropyl (meth)acrylate, dipropylene glycol mono (meth)acrylate, polyethylene glycol mono (meth)acrylate, and polypropylene glycol mono (meth)acrylate; and polyvalent (meth)acrylates such as trimethylolpropane di(meth)acrylate and pentaerythritol tri(meth)acrylate. The hydroxyl group-containing (meth)acrylates represented by general formula (2) above may be used alone or in combination of two or more. The hydroxyl group-containing (meth)acrylate represented by general formula (2) above is preferably 2-hydroxyethyl acrylate, 2-hydroxyethyl methacrylate, 2-hydroxypropyl acrylate, 2-hydroxypropyl methacrylate, 2-hydroxybutyl acrylate, of 2-hydroxybutyl methacrylate. The hydroxyl group-containing (meth)acrylate represented by general formula (2) above is more preferably 2-hydroxyethyl methacrylate, 2-hydroxypropyl acrylate, or 2-hydroxybutyl acrylate. The hydroxyl group-containing (meth)acrylate represented by general formula (2) above is even more preferably 2-hydroxyethyl methacrylate.

In general formula (1), R³ is a bivalent hydrocarbon group. The number of carbon atoms contained in R³ is preferably 5 to 15. The hydrocarbon groups constituting R³ include alkylene groups, cycloalkylene groups, and arylene groups, preferably cycloalkylene groups or arylene groups. These groups may have hydrogen atoms replaced by alkyl groups.

In general formula (1), -C(=O)-NH-R³-NH-C(=O)- is a structure derived from a diisocyanate compound represented by general formula (3).

OCN-R³-NCO (3)

Diisocyanate compounds represented by general formula (3) include isophorone diisocyanate, tolylene diisocyanate and a mixture of isomers or isomers thereof, tolidine diisocyanate, diphenylmethane diisocyanate, hydrogenated diphenylmethane diisocyanate, naphthalene diisocyanate, hexamethylene diisocyanate, xylylene diisocyanate, hydrogenated xylylene diisocyanate, and the like. The diisocyanate compound represented by general formula (3) may be used alone or in combination of two or more. The diisocyanate compound represented by general formula (3) is preferably isophorone diisocyanate, tolylene diisocyanate, diphenylmethane diisocyanate, or hexamethylene diisocyanate, and more preferably isophorone diisocyanate, tolylene diisocyanate, or diphenylmethane diisocyanate.

In general formula (1), -O-R⁴-O- is a structural unit derived from a compound represented by general formula (4).

HO-R⁴-OH (4)

The compound represented by general formula (4) is a polyester polyol, polyether polyol, or polyalkylene glycol having a number-average molecular weight of 300 to 8,000. Among them, polyalkylene glycol with a number-average molecular weight of 300 to 8,000 is preferred from the viewpoint of water resistance.

Polyalkylene glycols are obtained, for example, by addition polymerization of alkylene oxides to alcohols. The polyalkylene glycol is preferably at least one selected from the group consisting of polyethylene glycol, polypropylene glycol, a copolymer of ethylene glycol and propylene glycol (a copolymer having ethylene oxide units and propylene oxide units), and polytetramethylene glycol (polybutylene glycol).

The lower limit of the number-average molecular weight of the compound represented by general formula (4) is more preferably 600. Thus, the tensile elongation of the urethane (meth)acrylate can be increased to improve the toughness of the resulting cured product. From this point of view, the number-average molecular weight of HO-R⁴-OH is more preferably 1,000 or more, and even more preferably 2,000 or more.

The upper limit of the number-average molecular weight of the compound represented by general formula (4) is preferably 8,000. This allows a sufficiently strong part to be obtained. From this point of view, the number-average molecular weight of the compound represented by the above general formula (4) is more preferably 7,000 or less, and even more preferably 6,000 or less. In the present disclosure, the number-average molecular weight of the compound represented by general formula (4) above is obtained in accordance with JIS K 0070-1992: "Method for testing acid value, saponification value, ester value, iodine value, hydroxyl value and unsaponifiable matter of chemical products." First, the hydroxyl value of the compound represented by general formula (4) is determined as follows.

The hydroxyl value is determined by dissolving the sample in pyridine, adding a solution of acetyl chloride-toluene, heating, cooling, further boiling and allowing to cool, adding a solution of phenolphthalein as an indicator, and titrating with a solution of potassium hydroxide in ethanol.

After measuring the hydroxyl value, the number-average molecular weight of the compound was calculated using the value.

The number-average molecular weight of the compound represented by general formula (4) = 56.11 (g/mol) x 2 x 10³/hydroxyl value.

In the above general formula (1), n is the average value of the number of repetitions of the constituent units in square brackets in the above general formula (1), and n is a real number equal to or greater than 1.00. The value of n is determined based on the number-average molecular weight M_{nA} of the urethane (meth)acrylate contained in the radically polymerizable resin composition, for example, as follows. If the molecular weight outside the square brackets in the above general formula (1) is M₁ and the molecular weight of the constituent units inside the square brackets is M₂, the values of n can be obtained from M_{nA} = M₁ + nM₂. Here, M₂ is a value based on the number-average molecular weight of the compound represented by general formula (4). Since n is based on the number-average molecular weight, n is a number-based average of the whole urethane (meth)acrylate; and therefore, n is not limited to integers.

The value of n is preferably 6.00 or less. When the value of n is 6.00 or less, the viscosity of the urethane (meth)acrylate is low and good workability can be ensured. From this point of view, the value of n is more preferably 5.00 or less, and even more preferably 4.00 or less.

A method for producing urethane (meth)acrylate (A1) includes, for example, the following steps 1 and 2.

Step 1: A step of synthesizing a molecule having isocyanato groups at both ends by reacting a diisocyanate compound represented by general formula (3) with a compound represented by general formula (4).

Step 2: A step of reacting the molecule with a hydroxyl group-containing (meth)acrylate represented by the above general formula (2).

In the process of synthesizing a molecule with isocyanate groups at both ends, it is preferable to add a diisocyanate compound to the compound represented by the above general formula (4) in excess, that is, the molar ratio of NCO group/OH group exceeds 1.

### <Unsaturated Polyester (A2)>

Unsaturated polyester (A2) is a polymer obtained by polycondensation of a polyalcohol, an unsaturated polybasic acid, and, as required, at least one selected from saturated polybasic acids and monobasic acids as required. It is not particularly limited. Unsaturated polybasic acids are polybasic acids with an ethylenically unsaturated bond, and saturated polybasic acids are polybasic acids without an ethylenically unsaturated bond. Unsaturated polyesters may be used alone or in combination of two or more.

### «Polyvalent Alcohol»

Polyalcohols are not particularly restricted as long as they are compounds with two or more hydroxyl groups. Among them, ethylene glycol, propylene glycol, butanediol, diethylene glycol, dipropylene glycol, triethylene glycol, pentanediol, hexanediol, neopentanediol, tetraethylene glycol, polyethylene glycol, neopentyl glycol, 2-methyl-1, 3-propanediol, 2,2-dimethyl-1, 3-propanediol, 1,4-cyclohexanedimethanol, hydrogenated bisphenol A, bisphenol A, glycerin, ethylene oxide adduct of bisphenol A, and propylene oxide adduct of bisphenol A are preferred. Among them, ethylene glycol, propylene glycol, diethylene glycol, dipropylene glycol, neopentyl glycol, hydrogenated bisphenol A, ethylene oxide adduct of bisphenol A, and propylene oxide adduct of bisphenol A are more preferable from the viewpoint of water resistance and flexibility of the cured product. Polyvalent alcohols may be used alone or in combination of two or more.

### <<Unsaturated Polybasic Acids>>

Unsaturated polybasic acids are not particularly restricted as long as they are compounds with an ethylenically unsaturated bond and two or more carboxy groups, or their anhydrides. Examples of unsaturated polybasic acids include maleic acid, maleic anhydride, fumaric acid, citraconic acid, itaconic acid, chloromaleic acid, and the like. Among them, maleic anhydride, fumaric acid, citraconic acid, itaconic acid, and chloromaleic acid are preferable, and maleic anhydride and fumaric acid are more preferable from the viewpoint of heat resistance and mechanical strength of the cured product. Unsaturated polybasic acids may be used alone or in combination of two or more.

### <<Saturated Polybasic Acids>>

Saturated polybasic acids are not particularly restricted as long as they are compounds that do not have an ethylenically unsaturated bond and have two or more carboxy groups or their anhydrides. Examples of saturated polybasic acids include aromatic saturated polybasic acids or their acid anhydrides, such as phthalic acid, phthalic anhydride, isophthalic acid, terephthalic acid, halogenated phtehalic anhydrid such as tetrachlorophthalic anhydride and tetrabromophthalic anhydride, nitrophthalic acid; and aliphatic saturated polybasic acids or their acid anhydrides, such as succinic acid, adipic acid, sebacic acid, oxalic acid, malonic acid, azelaic acid, glutaric acid, and hexahydrophthalic anhydride. Among them, phthalic acid, phthalic anhydride, isophthalic acid, terephthalic acid, succinic acid, or adipic acid are preferable; and phthalic anhydride, isophthalic acid, terephthalic acid, or adipic acid are more preferable from the viewpoint of heat resistance and mechanical strength of the cured product.

### <<Monobasic Acids>>

Examples of monobasic acids include dicyclopentadiene malate, benzoic acid and its derivatives, and cinnamic acid and its derivatives, and dicyclopentadiene malate is preferred. Dicyclopentadiene malate can be synthesized from maleic anhydride and dicyclopentadiene by known methods. The use of monobasic acids can reduce the viscosity of unsaturated polyesters and reduce the use of ethylenically unsaturated compounds.

Unsaturated polyester (A2) can be synthesized by known methods using the above raw materials. Various conditions for the synthesis of unsaturated polyester (A2) can be set appropriately according to the raw material used and the amount of the raw material. In general, the esterification reaction can be used in an inert gas stream, such as nitrogen gas, under pressurized or reduced pressure at a temperature of 140°C to 230°C. In the esterification reaction, an esterification catalyst can be used as needed. Examples of esterification catalysts include known catalysts such as manganese acetate, dibutyltin oxide, stannous oxalate, zinc acetate, and cobalt acetate. The esterification catalysts may be used alone or in combination of two or more.

The weight-average molecular weight (Mw) of the unsaturated polyester (A2) is not particularly limited. The weight-average molecular weight of the unsaturated polyester (A2) is preferably 2,000 to 25,000, more preferably 2,500 to 20,000, and even more preferably 3,000 to 15,000.

### <Epoxy (Meth)acrylate (A3)>

Epoxy (meth)acrylate (A3) is a resin with polymerizable unsaturated bonds. Epoxy (meth)acrylates (A3) are generally obtained by ring-opening reactions between epoxy groups in epoxy resins having two or more epoxy groups and carboxy groups of unsaturated monobasic acids having polymerizable unsaturated bonds and carboxy groups. Such epoxy (meth)acrylates (A3) are described, for example, in the Handbook of Polyester Resins (Daily Industrial Newspaper, published in 1988).

### <<Epoxy Resin>>

The epoxy resin is not particularly limited as long as the resin has two or more epoxy groups. For example, at least one type selected from bisphenol-type epoxy resins, hydrogenated bisphenol-type epoxy resins, and novolac phenol-type epoxy resins can be used. Such epoxy resins can further improve the mechanical strength and corrosion resistance of the cured product.

Examples of the bisphenol-type epoxy resin include a compound obtained by reacting a bisphenol compound such as bisphenol A, bisphenol F, bisphenol S, and tetrabromobisphenol A with epichlorohydrin or methyl epichlorohydrin; and a compound obtained by reacting a condensate of a compound in which one or more of the above bisphenol compounds are glycidyl etherified and one or more of the above bisphenol compounds, with epichlorohydrin or methyl epichlorohydrin.

Examples of the above hydrogenated bisphenol-type epoxy resins include those obtained by reacting glycidyl ether of hydrogenated bisphenol A with bisphenol compounds such as bisphenol A, bisphenol F, bisphenol S, and tetrabromobisphenol A, and, if necessary, epichlorohydrin or methyl epichlorohydrin.

Examples of the novolac phenol-type epoxy resins include those obtained by reacting phenol novolac or cresol novolac with epichlorohydrin or methyl epichlorohydrin.

### <<Unsaturated Monobasic Acids>>

The unsaturated monobasic acid is not particularly limited as long as it is a monocarboxylic acid having a polymerizable unsaturated bond. For example, at least one selected from the group consisting of acrylic acid, methacrylic acid, crotic acid, and cinnamic acid is preferred, acrylic acid or methacrylic acid may is more preferred, and methacrylic acid is particularly preferred. Epoxy (meth)acrylates, which are obtained by the reaction of methacrylic acid with epoxy resins, have high resistance to acid and alkali hydrolysis and thus can further improve the corrosion resistance of cured products.

The amount of unsaturated monobasic acid used in the ring-opening reaction of epoxy resin and unsaturated monobasic acid is preferably 0.3 to 1.5 equiv, more preferably 0.4 to 1.2 equiv, and particularly preferably 0.5 to 1.0 equiv with respect to 1 equiv of epoxy group of epoxy resin. If the amount of unsaturated monobasic acid used is in the range of 0.3 to 1.5 equiv with respect to 1 equiv of epoxy group of epoxy resin, a cured product with sufficient hardness can be obtained by radical polymerization reaction of epoxy (meth)acrylate (A3).

### <<Method of Synthesizing Epoxy (Meth)acrylate (A3)>>

Epoxy (meth)acrylate (A3) can be synthesized by known synthetic methods. For example, in the presence of an esterification catalyst, epoxy resins and unsaturated monobasic acids are dissolved in a solvent as needed to react at 70°C to 150°C, preferably 80°C to 140°C, and even more preferably 90°C to 130°C.

Unreacted unsaturated monobasic acid after the synthesis of epoxy (meth)acrylate (A3) is regarded as ethylenically unsaturated compound (B) described later.

As an esterification catalyst, there are no particular restrictions. For example, one or more known catalysts such as a tertiary amine such as triethylamine, N,N-dimethylbenzylamine, N,N-dimethylaniline, diazabicyclooctane, or the like; phosphorus compounds such as triphenylphosphine, benzyltriphenylphosphonium chloride, or the like; or diethylamine hydrochloride, or the like, may be used.

### (Ethylene Unsaturated Compound (B))

The radically polymerizable resin composition of the present embodiment contains an ethylenically unsaturated compound (B). The ethylenically unsaturated compound (B) is a monomer compound having an ethylenically unsaturated group. The compound may include one or more ethylenically unsaturated groups. The ethylenically unsaturated compound (B) preferably has at least one selected from the group consisting of a polyalkyl ether-derived skeleton, a butadiene-derived skeleton, and an isoprene-derived skeleton.

Among them, polyalkyl ether-derived, butadiene-derived, and isoprene-derived skeletons are preferred in order to reduce the elastic modulus of cured resins and the temperature dependence of the elastic modulus; and polyalkyl ether-derived and butadiene-derived skeletons are especially preferred.

Examples of ethylenically unsaturated compounds (B) include unsaturated dicarboxylic acid diesters such as aromatic vinyl compounds, diene compounds, (meth)acrylates, (meth)acrylamide and diethyl citraconate; monomaleimide compounds such as N-phenylmaleimide; and N-(meth)acryloylphthalimide.

Examples of the aromatic vinyl compounds mentioned above include styrene, α-alkyl, o-alkyl, m-alkyl, and p-alkyl derivatives of styrene; nitro, cyano, amide, and ester derivatives of styrene; methoxystyrene; divinylbenzene; vinylnaphthalene; acenaphthylene; and the like. Examples of the α-alkyl, o-alkyl, m-alkyl, and p-alkyl derivatives of styrene mentioned above include vinyltoluene, t-butylstyrene, and the like.

The above diene compounds include butadiene, 2,3-dimethylbutadiene, isoprene, chloroprene, and the like.

Examples of the above (meth)acrylates include methyl (meth)acrylate, ethyl (meth)acrylate, propyl (meth)acrylate, n-butyl (meth)acrylate, t-butyl (meth)acrylate, 2-ethylhexyl (meth)acrylate, isodecyl (meth)acrylate, lauryl (meth)acrylate, tridecyl (meth)acrylate, stearyl (meth)acrylate, cyclohexyl (meth)acrylate, furfuryl (meth)acrylate, tetrahydrofurfuryl (meth)acrylate, phenyl (meth)acrylate, benzyl (meth)acrylate, phenoxyethyl (meth)acrylate, dicyclopentenyl (meth)acrylate, dicyclopentenyloxyethyl (meth)acrylate, allyl (meth)acrylate, isobornyl (meth)acrylate, ethylene glycol di (meth)acrylate, diethylene glycol di (meth)acrylate, propylene glycol di (meth)acrylate, neopentyl glycol di (meth)acrylate, tricyclodecanol di (meth)acrylate, trimethylolpropane tri (meth)acrylate, and the like.

Examples of the above (meth)acrylamide include (meth)acrylamide, N,N'-dimethyl (meth)acrylamide, N,N' -diisopropyl (meth)acrylamide, and the like.

Among the above examples of ethylenically unsaturated compounds (B), aromatic monomers and (meth)acrylates are preferable from the viewpoint of physical properties and surface dryness of cured products. Specifically, styrene, vinyltoluene, methyl (meth)acrylate, ethyl (meth)acrylate, propyl (meth)acrylate, phenyl (meth)acrylate, benzyl (meth)acrylate, phenoxyethyl (meth)acrylate, and n-lauryl (meth)acrylate are preferred, and styrene, vinyltoluene, methyl (meth)acrylate, benzyl (meth)acrylate, phenoxyethyl (meth)acrylate, and n-lauryl (meth)acrylate are more preferred.

The content of the ethylenically unsaturated compound (B) is 10 to 95 mass%, more preferably 20 to 90 mass%, and even more preferably 25 to 80 mass% with respect to the total of the radically polymerizable components. If the content of the ethylenically unsaturated compound (B) is 10 to 95 mass% with respect to the total of the radically polymerizable components, the hardened material can have a higher mechanical strength.

### (Hindered Phenolic Compound (C))

The hindered phenolic compound (C) is not particularly limited as long as the compound has one or two tertiary butyl groups adjacent to the phenolic hydroxyl group. The hindered phenolic compound (C) may be used alone or in combination of two or more.

Examples of hindered phenolic compounds (C) include tetrakis hindered phenolic compounds, tris hindered phenolic compounds, bis hindered phenolic compounds, mono hindered phenolic compounds, and the like.

Examples of the above-mentioned tetrakis-hindered phenolic compounds include pentaerythritol tetrakis (3-(3,5-di-tert-butyl-4 hydroxyphenyl) propionate).

Examples of the tris-hindered phenolic compounds mentioned above include 1,3,5-tris (3,5-di-tert-butyl-4-hydroxybenzyl)-1,3,5-triazine-2,4,6 (1H, 3H, 5H)-trione; 4,4,4- (1-methylpropanyl-3-indene) tris (6-tert-butyl-m-cresol); 1,3,5-tris (3,5-di-tert-butyl-4-hydroxyphenylmethyl)-2,4,6-trimethylbenzene; and the like.

Examples of the above bishindered phenolic compounds include 6,6-di-tert-butyl-4,4-butylidene-di-m-cresol; 3,9-bis{2-[3-(3-tert-butyl-4-hydroxy-5-methylphenyl)propionyloxy]-1,1-dimethylethyl}-2,4,8,10-tetraoxaspiro [5.5] undecane; 4,4-butylidene bis(6-tert-butyl-3-methylphenol); thiodiethylene bis[3-(3,5-di-tert-butyl-4-hydroxy-phenyl) propionate]; N,N-hexane-1,6-diyl bis(3-(3,5-di-tert-butyl-4-hydroxyphenylpropionamide)); ethylene bis(oxyethylene) bis-(3-(5-tert-butyl-4-hydroxy-m-toluyl) propionate); hexamethylene bis(3-(3,5-di-tert-butyl-4-hydroxyphenyl) propionate); and the like.

Examples of the above monohindered phenolic compounds include octadodecyl-3-(3,5-di-tert-butyl-4-hydroxyphenyl) propionate; benzenepropanoic acid 3,5-bis(1,1-dimethyl-ethyl)-4-hydroxy-alkyl ester; 4,6-bis(octylthiomethyl)-o-cresol; and 2,6-di-tert-butyl-4-(4,6-bis(octylthio)-1,3,5-triazine-2-ylamino) phenol.

Among them, tetrakis hindered phenolic compounds, tris hindered phenolic compounds, bis hindered phenolic compounds, and mono hindered phenolic compounds are preferable from the viewpoint of volatility and oil resistance under a high-temperature environment; tetrakis hindered phenolic compounds, tris hindered phenolic compounds, and bis hindered phenolic compounds are more preferable; and tetrakis hindered phenolic compounds and tris hindered phenolic compounds are even more preferable.

Furthermore, from the viewpoint of compatibility with the radically polymerizable resin (A) and the ethylenically unsaturated compound (B), the molecular weight is preferably 300 to 3,000, more preferably 350 to 2,500, and even more preferably 400 to 2,000.

"Tris hindered phenolic compounds" and "tetrakis hindered phenolic compounds" are compounds that contain three and four hindered phenolic groups in their molecules, respectively.

The hindered phenolic compound (C) is preferably 0.05 to 5.0 parts by mass, and more preferably 0.1 to 3.0 parts by mass, with respect to a total of 100 parts by mass of the radically polymerizable resin (A) and the ethylenically unsaturated compound (B). More preferably, it is 0.2 to 1.5 parts by mass. With respect to a total of 100 parts by mass of the radically polymerizable resin (A) and the ethylenically unsaturated compound (B), if the amount is 0.05 parts by mass or more, the stability of the change in physical properties in a high-temperature environment is good, and if the amount is 5.0 parts by mass or less, bleed-out can be suppressed.

### (Hindered Amine Compound (D))

The hindered amine compound (D) is not particularly limited as long as the compound has an alkyl group adjacent to the amino group, but a compound having a polymethyl-4-piperidyl group is especially preferable. The hindered amine compound (D) may be used alone or in combination of two or more.

Examples of the hindered amine compounds (D) include tetrakis hindered amine compounds such as tetrakis(1,2,2,6,6-pentamethyl-4-piperidyl) butane-1,2,3,4-tetracarboxylate and tetrakis(2,2,6,6-tetramethyl-4-piperidyl) butane-1,2,3,4-tetracarboxylate; trishindered amine compounds such as trisamine; bishindered amine compounds such as bis(1,2,2,6,6-pentamethyl-4-piperidyl) sebacate, and bis(2,2,6,6-tetramethyl-4-piperidyl) sebacate; bis(1-undecanoxy-2,2,6,6,-tetramethylpiperidine-4-yl) carbonate; monohindered amine compounds such as 2,2,6,6-tetramethylpiperidine-4-yl-octadecanoate; and (meth)acrylate-hindered amine compounds such as 1,2,2,6,6-pentamethyl-4-piperidyl methacrylate, 2,2,6,6-tetramethyl-4-piperidyl methacrylate.

From the viewpoint of volatility and oil resistance under high temperature conditions, tetrakis hindered amine compounds, tris hindered amine compounds, bis hindered amine compounds, mono hindered amine compounds, and (meth)acrylate hindered amine compounds are preferred; tetrakis hindered amine compounds, tris hindered amine compounds, bis hindered amine compounds, and (meth)acrylate hindered amine compounds are more preferred; and tetrakis hindered amine compounds, tris hindered amine compounds, and (meth)acrylate hindered amine compounds are even more preferred.

"Tris hindered amine compounds" and "tetrakis hindered amine compounds" are compounds containing three or four hindered amine groups in the molecule, respectively.

Furthermore, from the viewpoint of compatibility with the radically polymerizable resin (A) and the ethylenically unsaturated compound (B), the molecular weight is preferably 100 to 3,000, more preferably 150 to 2,500, and even more preferably 200 to 1,500.

The hindered amine compound (D) is preferably 0.05 to 5.0 parts by mass, and more preferably 0.1 to 3.0 parts by mass, with respect to a total of 100 parts by mass of the radically polymerizable resin (A) and the ethylenically unsaturated compound (B). More preferably, it is 0.2 to 1.5 parts by mass. With respect to a total of 100 parts by mass of the radically polymerizable resin (A) and the ethylenically unsaturated compound (B), if the amount is 0.05 parts by mass or more, the stability of the change in physical properties in a high-temperature environment is good, and if the amount is 5.0 parts by mass or less, bleed-out can be suppressed.

### (Curing Agent (E))

The radically polymerizable resin composition may contain a curing agent (E). The amount (total amount) of the curing agent (E) added to the radically polymerizable resin composition is appropriately set according to the type of the radically polymerizable resin (A), the conditions of use of the radically polymerizable resin composition, the reaction conditions, and the like. Normally, 0.1 to 10 parts by mass is preferred, 0.15 to 8 parts by mass is more preferred, and 0.2 to 5 parts by mass is even more preferred, with respect to a total of 100 parts by mass of the radically polymerizable resin (A) and the ethylenically unsaturated compound (B). In such a range, the radical polymerization reaction is promoted, so that a cured product with a high curing degree can be obtained in a short time.

When the curing agent (E) is stored under conditions that do not initiate the radical polymerization reaction of the radically polymerizable resin (A), it may be contained in the radically polymerizable resin composition beforehand from the viewpoint of work efficiency, and the like.

A type of curing agent (E) is appropriately selected according to the type of radically polymerizable resin (A), the conditions of use of the radically polymerizable resin composition, reaction conditions, and the like, but a known thermal radical polymerization initiator (E1), a photo-radical polymerization initiator (E2), and the like, can be used. They may be used alone or in combination of two or more.

Examples of the thermal radical polymerization initiator (E1) include organic peroxides such as diacyl peroxide such as benzoyl peroxide; peroxy esters such as t-butyl peroxybenzoate; hydroperoxides such as cumene hydroperoxides; dialkyl peroxides such as dicumyl peroxides; ketone peroxides such as methyl ethyl ketone peroxides and acetyl acetone peroxides; peroxy ketal; alkyl perester; and percarbonates.

Examples of photo-radical polymerization initiators (E2) include acetophenones, benzophenones, 1-phenyl-1,2-propanedione-2-(O-ethoxycarbonyl) oximes, 1-phenyl-1,2-propanedione-2-(O-benzoyl) oximes, benzoins, benzoin ethers, carbonyl compounds, anthraquinone or thioxanthone derivatives, sulfur compounds, bis(2,4,6-trimethylbenzoyl) phenylphosphine oxide, and the like.

Examples of the acetophenones mentioned above include acetophenone, 2'-phenylacetophenone, 2,2-dimethoxy-2-phenylacetophenone, 2,2-diethoxyacetophenone, 4'-isopropyl-2-hydroxy-2-methylpropiophenone, 2-hydroxy-2-methylpropiophenone, α,α-dichloroacetophenone, and the like.

Examples of the above benzophenones include 4,4'-bis(diethylamino) benzophenone, methyl (orthobenzoyl) benzoate, and benzophenone.

Examples of the above benzoin ethers include benzoin methyl ether, benzoin ethyl ether, benzoin isopropyl ether, benzoin isobutyl ether, and benzoin octyl ether.

Examples of the above carbonyl compounds include benzyl, benzyl dimethyl ketal, benzyl diethyl ketal, and diacetyl.

Examples of the anthraquinone or thioxanthone derivatives include methylanthraquinone, chloroanthraquinone, 2-chlorothioxanthone, 2-methylthioxanthone, 2-isopropylthioxanthone.

Examples of the above sulfur compounds include diphenyl disulfide, dithiocarbamate.

From the viewpoint of ensuring usable time, among these compounds, the thermal radical polymerization initiator (E1) such as hydroperoxides such as cumene hydroperoxide, dialkyl peroxides such as dicumyl peroxide; and photo-radical polymerization initiators (E2) are preferred. Cumene hydroperoxide, dicumyl peroxide, acetophenone, 2'-phenylacetophenone, benzoin ether, and bis(2,4,6-trimethylbenzoyl) phenylphosphine oxide are more preferred; and dicumyl peroxide, 2'-phenylacetophenone, and bis(2,4,6-trimethylbenzoyl) phenylphosphine oxide are even more preferred.

### (Additive (F))

The radically polymerizable resin composition may contain various additives (F) such as colorants, fibers, coupling agents, surfactants, waxes, rocking modifiers, and the like, depending on the purpose of use, application, and the like, as required.

The content of the additive can be adjusted as appropriate according to the desired physical properties of the cured product of the radically polymerizable resin composition to be produced within a range that does not affect the curing performance and storage stability of the resin composition. The total amount of the additive is preferably 0.1 to 700 parts by mass, more preferably 0.1 to 500 parts by mass, and even more preferably 0.1 to 300 parts by mass, with respect to a total of 100 parts by mass of the radically polymerizable components.

### (Solvent (G))

A solvent (G) is used as needed from the viewpoint of uniformly mixing each component contained in the radically polymerizable resin composition. Its amount is not particularly limited, and may be adjusted as appropriate according to the ease of handling in use. The type of solvent (G) is suitably selected according to the type of resin, application, and the like, within a range that does not affect the curing performance and storage stability of the radically polymerizable resin composition. For example, aliphatic hydrocarbons, aromatic hydrocarbons, ethers, ketones, esters, and chain carbonates can be used. They may be used alone or in combination of two or more.

Specifically, examples of aliphatic hydrocarbons include cyclohexane, n-hexane, mineral spirits such as white spirits and odorless mineral spirits. Examples of aromatic hydrocarbons include naphthene, mixtures of naphthene and paraffin, benzene, toluene, and quinoline. Examples of ethers include diethyl ether, diisopropyl ether, and the like. Examples of ketones include acetone, methyl ethyl ketone, cyclohexanone. Examples of esters include ethyl acetate, butyl acetate, diethyl malonate, diethyl succinate, dibutyl succinate, dibutyl maleate, 2,2,4-trimethylpentanediol diisobutylate, monoesters and diesters of ketoglutaric acids, pyruvate, palmitate, and monoesters and diesters of ascorbic acid. Examples of chain carbonates include dimethyl carbonate, diethyl carbonate, and the like. In addition, 1,2-dioximes, N-methylpyrrolidone, 1-ethyl-2-pyrrolidinone, N,N-dimethylformamide, and the like can be used.

The solvent (G) can also be found in commercial products of radically polymerizable resins (A) and ethylenically unsaturated compounds (B).

### (Production Method of Radically Polymerizable Resin Composition)

Radically polymerizable resin compositions can be produced, for example, by a method of kneading each of the above components (A) - (D) with one or more of the above components (E) and (F) as required. There are no particular restrictions on the kneading method, and, for example, a double-arm kneader, a pressurized kneader, a planetary mixer, or the like can be used. The kneading temperature is preferably -10°C to 80°C, more preferably 0°C to 60°C, and most preferably 20°C to 60°C. When the kneading temperature is -10°C or higher, the kneading property is improved. When the kneading temperature is 80°C or less, the curing reaction during the kneading of the radically polymerizable resin composition can be more suppressed. The kneading time can be selected as appropriate according to each ingredient and its ratio.

There is no particular restriction on the order in which each component is kneaded in the production of the radically polymerizable resin composition. For example, mixing a part or all of the radically polymerizable resin (A) and the ethylenically unsaturated compound (B) before mixing other components is preferable because it is easy to obtain a uniformly mixed radically polymerizable resin composition.

When mixing and stirring, as described above, solvents may be used as appropriate from the viewpoint of uniformly mixing each ingredient.

### (Cured Product of Radically Polymerizable Resin Composition)

A cured product of a radically polymerizable resin composition can be obtained by curing the resin composition by a known method. For example, when a thermal radical polymerization initiator (E1) is added, the resin composition can be cured under normal temperature or by heating, and when a photo-radical polymerization initiator (E2) is added, the resin composition can be cured by irradiation with active energy rays such as ultraviolet rays. Here, the specific temperature range for normal temperature and heating can be, for example, a temperature range of 15°C to 200°C.

### (Sealants and Electrical and Electronic Parts)

The radically polymerizable resin composition of the present embodiment can be used as a material (sealant) for sealing electric and electronic components. Using the radically polymerizable resin composition of the present embodiment, resin-sealed electrical and electronic components can exhibit excellent properties with little change in strength properties with respect to the cured product of the sealing material, and the radically polymerizable resin composition has excellent heat resistance even when it is exposed to a high-temperature environment for a long time.

### EXAMPLES

Hereafter, the invention is described in detail by way of examples, but the invention is not limited by these.

"Production of Radically Polymerizable Resins"
(Synthesis Example 1)
Urethane (Meth)acrylate UAc-1

500 g of diphenylmethane diisocyanate, 1002 g of polypropylene glycol (number-average molecular weight 1,002), 0.53 g of hydroquinone, and 0.11 g of dibutyl tin laurate were charged into a flask equipped with an agitator, a reflux cooling tube, a thermometer, and a gas introduction tube, and the mixture was allowed to react at 75°C for 1 hour while being heated and stirred. Then, 273 g of 2-hydroxyethyl methacrylate was charged and reacted at 80°C for 3 hours while being heated and stirred to obtain urethane (meth)acrylate UAc-1 as the urethane (meth)acrylate (A1) of the present embodiment.

### (Synthesis Example 2)

### Urethane (Meth)acrylate UAc-2

A flask equipped with an agitator, a reflux cooling tube, a thermometer, and a gas introduction tube was charged with 752.4 g of hydroxyl-terminated polybutadiene (Poly bd (registered trademark), Idemitsu), 47.3 g of 2-isocyanatoethyl methacrylate, 0.24 g of hydroquinone, and 0.05 g of dibutyltin laurate, and was reacted at 80°C for 3 hours while being heated and stirred to obtain urethane (meth)acrylate UAc-2 as the urethane (meth)acrylate (A1) of the present embodiment.

### (Synthesis Example 3)

### Unsaturated Polyester UPE

191 g of propylene glycol, 164 g of diethylene glycol, 64 g of isophthalic acid, and 64 g of terephthalic acid were charged into a flask equipped with an agitator, a reflux cooling tube, a thermometer, and a gas introduction tube, and the flask was allowed to react at 215°C for 5 hours while being heated and stirred, and then was cooled to 120°C. Then, 189 g of maleic anhydride and 0.04 g of tert-butyl hydroquinone were added to the mixture, and the mixture was heated and stirred to react at 215°C, was cooled when the acid value reached 20 mg KOH/g, and 0.05 g of hydroquinone and 0.02 g of copper naphthenate were added to the mixture to obtain unsaturated polyester UPE as the unsaturated polyester (A2) of the present embodiment.

### (Synthesis Example 4)

### Epoxy (Meth)acrylate EAc

A flask equipped with an agitator, a reflux condenser, a thermometer, and a gas introduction tube was filled with 534 g of bisphenol A type epoxy resin (EP1CLON (registered trademark) 840, DIC Inc.), 64 g of methacrylic acid, 2.1 g of triethylamine, and 0.2 g of hydroquinone, and was allowed to react at 120°C while air was blown, and was cooled when the acid value fell below 5 mg KOH/g to obtain epoxy (meth)acrylate EAc as the epoxy (meth)acrylate (A3) of the present embodiment.

### Production of Radically Polymerizable Resin Composition

### (Example 1)

The radically polymerizable resin composition was obtained by adding 60 g (60 parts by mass) of the urethane (meth)acrylate UAc-1 obtained in Synthesis Example 1 above, 30 g (30 parts by mass) of phenoxyethyl methacrylate, 10 g (10 parts by mass) of lauryl methacrylate, 0.5 g (0.5 parts by mass) of adecastab (registered trademark) AO-60 (pentaerythritol tetrakis (3-(3,5 di-tert-butyl-4-hydroxyphenyl) propionate)), 0.3 g (0.3 parts by mass) of adecastab (registered trademark) LA-72 (main component: bis(1, 2,2,6,6-pentamethyl-4-piperidyl) sebacate), and 0.3 g (0.3 parts by mass) of benzyl dimethyl ketal, and stirring and mixing at 25°C.

### (Examples 2 to 9, Comparative Examples 1 to 3)

Radically polymerizable resin compositions were obtained in the same manner as in Example 1 with the formulation compositions shown in Table 1 below.

### Preparation of Specimen A

A radically polymerizable resin composition obtained in Examples 1 to 9 and Comparative Examples 1 to 3 was injected into a molding die with an inner diameter of 50 mm and a thickness of 2 mm, respectively. The radically polymerizable resin composition was then cured by irradiation with an LED-UV lamp (representative wavelength: 365 nm, illuminance: 150 mW/cm²) for 5 minutes to obtain each specimen A.

### Preparation of Specimen B

Examples 1 to 9 and Comparative Examples 1 to 3. The obtained radically polymerizable resin composition was injected into molds with an inner diameter of 50 mm and a thickness of 6 mm, respectively. The radically polymerizable resin composition was then cured by irradiation with an LED-UV lamp (representative wavelength: 365 nm, illuminance: 150 mW/cm²) for 5 minutes to obtain each specimen B.

### Preparation of Specimen C

The radically polymerizable resin compositions obtained in Examples 1 to 9 and Comparative Examples 1 to 3 were injected into a molding die of 30 mm x 4 mm x 2 mm, respectively. The radically polymerizable resin composition was then cured by irradiation with an LED-UV lamp (representative wavelength: 365 nm, illuminance: 150 mW/cm²) for 5 minutes to obtain each specimen C.

Each item was evaluated and the evaluation results are summarized in Table 1 below.

### Evaluation of Radically Polymerizable Resin Composition

### <Cracks >

Specimen A (50 mm diameter, 2 mm height) was placed in a thermostatic bath under an air atmosphere of 150°C for 240 hours. After 240 hours, the cured material was removed and allowed to cool to room temperature. Then, the cured material was visually checked for cracks. Cracks were evaluated according to the following criteria:

### B: No crack

### D: Having cracks

### <Shore Hardness>

The hardness (initial hardness) of specimen B (50 mm diameter, 6 mm height) at 23°C was measured according to JIS K 6253 using a hardness meter (Askar Rubber Hardness Meter Type A, manufactured by Polymer Meter Co., Ltd.).

After the initial hardness measurement, Specimen B was placed in a thermostatic bath under an air atmosphere of 150°C for 240 hours. After 240 hours, the cured material was removed and allowed to cool to room temperature. Hardness (final hardness) was measured similarly to initial hardness. From the initial and final hardness, the percentage change in hardness was calculated based on the following equation (I).Percentage Change in Hardness (%) = [(Final Hardness - Initial Hardness) / Initial Hardness] x 100

Based on the calculated hardness change rate, the heat resistance was evaluated according to the following evaluation criteria.

A: Hardness change rate less than +/- 5%
B: Percentage change in hardness of more than +/- 5% but less than +/- 10%
C: Percentage change in hardness of more than +/- 10% but less than +/- 20%
D: Percentage change in hardness of +/- 20% or more

### <Storage Modulus>

The storage modulus (initial modulus) (1.0 Hz) of specimen C (30 mm x 4 mm x 2 mm) was measured using a dynamic viscoelastic measuring machine (made by UBM Corporation, Rheogel-E 4000).

### Measurement conditions:

Temperature: -50°C to 180°C
Frequency: 1 Hz
Amplitude: 0.01%
Tensile mode

Specimen C was placed in a thermostatic bath under an air atmosphere of 150°C for 240 hours. After 240 hours, the cured material was removed and allowed to cool to room temperature. The storage modulus (final modulus) (1.0 Hz) was measured similarly to the initial modulus. From the initial and final elastic moduli, the rate of change in the elastic modulus was calculated based on the following equation (II). Modulus of Change (%) = [(Final Modulus - Initial Modulus) / Initial Modulus] x 100

Based on the calculated elastic modulus change rate, the heat resistance was evaluated according to the following evaluation criteria.

A: Modulus change rate less than +/- 20%
B: The rate of change of the elastic modulus is more than +/- 20% and less than +/-35%.
C: The rate of change of the elastic modulus is more than +/- 35% and less than +/-55%.
D: Modulus of change of elastic modulus: +/- 55% or more

### -: Not measurable (due to cracks)

**[Table 1]**

| Unit: part by mass | | | | | | | | | | | | | |
|---|---|---|---|---|---|---|---|---|---|---|---|---|---|
| Components | Constituents | Example 1 | Example 2 | Example 3 | Example 4 | Example 5 | Example 6 | Example 7 | Example 8 | Example 9 | Comparative Example 1 | Comparative Example 2 | Comparative Example 3 |
| Radically polymerizable resins (A) | UAc-1 | 60 | 60 | 60 | 60 | 60 | 60 | | | | 60 | 60 | 60 |
| | UAc-2 | | | | | | | 60 | | | | | |
| | UPE | | | | | | | | 60 | | | | |
| | EAc | | | | | | | | | 60 | | | |
| Ethylenically unsaturated compounds (B) | PEMA | 30 | 30 | 30 | 30 | 30 | 30 | 30 | | | 30 | 30 | 30 |
| | LMA | 10 | 10 | 10 | 10 | 10 | 10 | 10 | | | 10 | 10 | 10 |
| | ST | | | | | | | | 40 | 40 | | | |
| Hindered phenolic compounds (C) | AO-60 | 0.5 | | | 0.5 | 0.5 | 0.5 | 0.5 | 0.5 | 0.5 | | 0.5 | |
| | AO-80 | | 0.5 | | | | | | | | | | |
| | AO-40 | | | 0.5 | | | | | | | | | |
| Hindered amine compounds (D) | LA-72 | 0.3 | 0.3 | 0.3 | | | | 0.3 | 0.3 | 0.3 | | | 0.3 |
| | LA-52 | | | | 0.3 | | | | | | | | |
| | LA-82 | | | | | 0.3 | | | | | | | |
| | LA-77 | | | | | | 0.3 | | | | | | |
| Curing agent (E) | BDMK | 0.3 | 0.3 | 0.3 | 0.3 | 0.3 | 0.3 | 0.3 | 0.3 | 0.3 | 0.3 | 0.3 | 0.3 |
| Evaluation items | Cracks | B | B | B | B | B | B | B | B | B | D | D | D |
| | Hardness change rate | A | A | B | B | A | A | B | B | B | D | D | D |
| | Modulus of change | A | A | C | B | A | B | B | C | B | - | - | - |

In Table 1, the meanings of the symbols for each raw material are as follows:

### (Radically Polymerizable Resin (A))

UAc-1: Urethane (meth)acrylate (A-1) obtained in Synthetic Example 1
UAc-2: Urethane (meth)acrylate (A-1) obtained in Synthetic Example 2
UPE: Unsaturated polyester (A-2) obtained in Synthetic Example 3
EAc: Epoxy (meth)acrylate (A-3) obtained in Synthetic Example 4
(Ethylene Unsaturated Compound (B))
PEMA: Phenoxyethyl methacrylate (light ester PO), Manufacturer: Kyoeisha Chemical Co., Ltd.
LMA: Lauryl methacrylate (Light Ester L), Manufacturer: Kyoeisha Chemical Co., Ltd.
ST: Styrene, Manufacturer: NS Styrene Monomer Co., Ltd.

### (Hindered Phenolic Compound (C))

AO-60: adecastab (registered trademark) AO-60, pentaerythritol tetrakis (3-(3,5-di-tert-butyl-4-hydroxyphenyl) propionate), Manufacturer: ADEKA Co., Ltd., Molecular weight: 1,178
AO-80: adecastab (registered trademark) AO-80, 3,9-bis{2-[3-(3-tert-butyl-4-hydroxy-5-methylphenyl) propionyloxy]-1,1-dimethylethyl} -2,4,8,10-tetraoxaspiro[5.5]undecane, Manufacturer: ADEKA Co., Ltd., Molecular weight: 741
AO-40: adecastab (registered trademark) AO-40, 6,6'-di-tert-butyl-4,4'-butylidene-di-m-cresol, Manufacturer: ADEKA Co., Ltd., Molecular weight: 383

### (Hindered Amine Compound (D))

LA-72: adecastab (registered trademark) LA-72, Manufacturer: ADEKA Co., Ltd., Molecular weight: 509 (Principal component: bis(2,2,6,6-tetramethyl-4 piperidyl) sebacate)
LA-52: adecastab (registered trademark) LA-52, Tetrakis (1,2,2,6,6-pentamethyl-4 piperidyl) butane-1,2,3,4-tetracarboxylate, Manufacturer: ADEKA Co., Ltd., Molecular weight: 847
LA-82: adecastab (registered trademark) LA-82, 1,2,2,6,6-pentamethyl-4 piperidyl methacrylate, Manufacturer: ADEKA Co., Ltd., Molecular weight: 239
LA-77: adecastab (registered trademark) LA-77, Bis(2,2,6,6-tetramethyl-4 piperidyl) sebacate, Manufacturer: ADEKA Co., Ltd., Molecular weight: 481
BDMK: Benzyl dimethyl ketal, Manufacturer: Tokyo Chemical Industry Co., Ltd.

For Examples 1 to 2 and 4 to 9, the cured product was obtained without cracks and with excellent flexibility and stability of strength properties. These hardened products are moderately soft at room temperature and show a small rate of change in flexibility and strength properties even when exposed to high temperatures for a long time. In Example 3, a cured product was obtained without cracks and with excellent stability of strength properties. Therefore, the cured products of these radically polymerizable resin compositions are considered to be plastic materials with excellent long-term thermal stability.

On the other hand, Comparative Example 1 without a hindered phenolic compound (C) and a hindered amine compound (D), Comparative Example 2 without a hindered amine compound (D), and Comparative Example 3 without a hindered phenolic compound (C) are all considered to be poor in long-term thermal stability because cracks were generated by prolonged exposure to high temperatures.

From the comparison between the examples, it was found that the radically polymerizable resin composition contains a specific hindered phenolic compound (C) and a hindered amine compound (D), resulting in excellent long-term thermal stability.

As to the reason why only a cured product of a radically polymerizable resin composition combining a hindered phenolic compound (C) and a hindered amine compound (D) can provide a plastic material with excellent long-term thermal stability, it is inferred that the hindered amine compound acts on the oxide of the hindered phenolic compound as a reducing agent.

### [Industrial Availability]

The cured product of the radically polymerizable resin composition can be used for various applications such as protection of electrical and electronic components because of its excellent long-term thermal stability.

## Claims

1. A radically polymerizable resin composition comprising:
a radically polymerizable resin (A);
an ethylenically unsaturated compound (B);
a hindered phenolic compound (C); and
a hindered amine compound (D).

2. The radically polymerizable resin composition according to claim 1, wherein the radically polymerizable resin (A) comprises at least one selected from the group consisting of urethane (meth)acrylate (A1), unsaturated polyester (A2), and epoxy (meth)acrylate (A3).

3. The radically polymerizable resin composition according to claim 1 of 2, wherein with respect to a total of 100 parts by mass of the radically polymerizable resin (A) and the ethylenically unsaturated compound (B), the radically polymerizable resin composition comprises
0.05 to 5.0 parts by mass of the hindered phenolic compound (C), and
0.05 to 5.0 parts by mass of the hindered amine compound (D).

4. The radically polymerizable resin composition according to claim 1 or 2, wherein the radically polymerizable resin (A) or the ethylenically unsaturated compound (B) comprises at least one selected from the group consisting of a polyalkyl ether-derived skeleton, a butadiene-derived skeleton, and an isoprene-derived skeleton.

5. The radically polymerizable resin composition according to claim 1 or 2, wherein the hindered phenolic compound (C) is at least one selected from the group consisting of a tetrakis hindered phenolic compound, a tris hindered phenolic compound, a bis hindered phenolic compound, and a mono hindered phenolic compound.

6. The radically polymerizable resin composition according to claim 1 or 2, wherein the hindered amine compound (D) is at least one selected from the group consisting of a tetrakis hindered amine compound, a tris hindered amine compound, a bis hindered amine compound, a mono hindered amine compound, and a (meth)acrylate hindered amine compound.

7. The radically polymerizable resin composition according to claim 1 or 2, wherein the hindered phenolic compound (C) has a molecular weight of 300 to 3,000.

8. The radically polymerizable resin composition according to claim 1 or 2, wherein the hindered amine compound (D) has a molecular weight of 100 to 3,000.

9. The radically polymerizable resin composition according to claim 1 or 2, further comprising a curing agent (E).

10. The radically polymerizable resin composition according to claim 9, wherein the curing agent (E) is a photo-radical polymerization initiator.

11. The radically polymerizable resin composition according to claim 1 or 2, wherein the radically polymerizable resin composition is for sealing electrical and electronic components.

12. A sealant using the radically polymerizable resin composition according to claim 1 or 2.

13. An electrical and electronic component, which is resin-sealed using the sealant according to claim 12.
